# EUROPÄISCHE PATENTSCHRIFT

(11) **EP 3 625 740 B1**
(45) Veröffentlichungstag und Bekanntmachung des Hinweises auf die Patenterteilung: **09.08.2023**
(21) Anmeldenummer: 18726438.7
(22) Anmeldetag: 18.05.2018
(51) Int. Cl.: G06Q 10/08, G06K 7/10

(54) **VORRICHTUNG UND VERFAHREN ZUM STEUERN EINES MATERIALFLUSSES AN EINEM MATERIALFLUSS-KNOTENPUNKT**
SYSTEM AND METHOD FOR CONTROLLING A MATERIAL FLOW AT AN INTERSECTION
SYSTÈME ET MÉTHODE POUR CONTRÔLER UN FLUX DE MATIÈRE SUR UN POINT DE NOEUD

(30) Priorität: 18.05.2017 DE 102017110861
(43) Veröffentlichungstag der Anmeldung: 25.03.2020
(73) Patentinhaber: SSI Schäfer Automation GmbH (AT), 8051 Graz (AT)
(72) Erfinder: WINKLER, Max, 8010 Graz (AT)
(74) Vertreter: Witte, Weller & Partner Patentanwälte mbB
(86) Internationale Anmeldenummer: PCT/EP2018/063091
(87) Internationale Veröffentlichungsnummer: WO 2018/211072

(56) Entgegenhaltungen:
- EP-A1- 3 100 648
- DE-A1- 4 408 650
- DE-A1-102007 035 272
- DE-A1-102015 209 963
- DE-A1-102015 219 544
- DE-A1-102015 219 660
- NZ-A- 556 253
- US-A1- 2008 144 880
- US-A1- 2009 321 511
- US-A1- 2013 118 814
- US-A1- 2014 180 479

## Beschreibung

Die vorliegende Erfindung betrifft eine Vorrichtung bzw. ein System sowie ein Verfahren zum Steuern eines Materialflusses in einem Lager- und Kommissioniersystem an einem sensorgesteuerten Knotenpunkt des Materialflusses, wo sich der Materialfluss stromabwärts in mindestens zwei ausgangsseitige Richtungen aufteilt.

Allgemein wird unter dem Materialfluss eine Abfolge von Lager-, Transport- und Bearbeitungsprozessen verstanden. Um Objekte des Materialflusses, also Materialfluss-Objekte, durch ein (logistisches) Lager- und Kommissioniersystem zu lenken und zu führen, wird bisher eine sehr große Anzahl von (technisch möglichst einfachen und günstigen) Sensoren, insbesondere Lichttaster, Lichtschranken und Scanner, eingesetzt. Diese Sensoren werden überall innerhalb eines Gesamtsystems eingesetzt, insbesondere an Knotenpunkten (Kreuzungen, Verzweigungen, Vereinigungspunkten, etc.) des Materialflusses. An den Knotenpunkten werden oft mehrere Sensoren simultan eingesetzt. Ein generelles Ziel ist es, ein "Tracking" und "Tracing" durchführen zu können. Unter Tracing und Tracking versteht man in der (Intra-)Logistik eine (innerbetriebliche) Verfolgung der Materialfluss-Objekte.

Ein Ziel des Tracking ist es, jederzeit den genauen Ort des Objekts innerhalb des Gesamtsystems feststellen und abrufen zu können. Auf Grundlage dieser Information können Prozesse optimiert und ungenutzte Kapazitäten reduziert werden, zum Beispiel durch eine exakte Planung des Materialflusses, einer Lagerbelegung, eines Wareneingangs oder von Ähnlichem. Tracking bezeichnet die Verfolgung des Objekts von einer Quelle bis zu einer Senke. Tracing bezeichnet eine Rückverfolgung vom Endkunden bis zum Punkt der Urerzeugung.

Neben den einfachen und günstigen Sensoren, wie den oben genannten Lichttastern, Lichtschranken und Scannern, werden heute verstärkt auch Kameras für intralogistische Zwecke eingesetzt.

Eine Materialflusssteuerung mittels einer Videokamera ist in der DE 10 2006 015 689 A1 offenbart. Zustandsbilder der Kamera werden ausgewertet, um eine tatsächliche Position des zu befördernden Objekts in einem vorbestimmten Bereich des Systems zu bestimmen. Die Videokamera ist z.B. senkrecht über einer Fördertechnik angeordnet. Die Zustandsbilder werden ausgewertet, um eine Ist-Position von Fördergütern (Materialfluss-Objekten) zu bestimmen, die dann mit einer Soll-Position verglichen wird, um entsprechende Fördertechnik-Steuersignale basierend auf dem Soll-Ist-Vergleich zu erzeugen.

In der DE 10 2011 055 455 A1 wird eine Videokamera eingesetzt, um die Positionen von Objekten innerhalb eines Transportbehälters zu bestimmen, wobei die Transportbehälter auf einer Fördertechnik transportiert werden. Die DE 10 2011 053 547 A1 offenbart den Einsatz von Videokameras, um einen Umsetzvorgang eines Förderguts durch einen Roboter zu überwachen, der zwischen zwei parallel angeordneten Fördertechniken positioniert ist. Insbesondere werden Identifizierungskennzeichen und Abmessungen der Fördergüter mittels der Kameradaten bestimmt. Ein ähnliches System ist in der DE 10 2010 002 317 A1 offenbart. Des Weiteren wird in der DE 10 2010 001 569 A1 ein Befüllungszustand eines Schachts eines Kommissionierautomaten mit einer Videokamera überwacht. Videokameras werden also bereits für spezielle Zwecke in der Intralogistik eingesetzt. Jedoch wird dabei immer stillschweigend vorausgesetzt, dass eine Identität der zu handhabenden Objekte sicher bekannt ist.

Die DE 10 2007 035 272 A10 offenbart ein Verfahren zum Identifizieren von Transportgütern, insbesondere Gepäckstücken mit einer Vielzahl von Sensoren. Technologischer Hintergrund findet sich in dem Buch "Materialfluss in Logistiksystemen" (6. Auflage, Berlin, Heidelberg, New York: Springer 2009, Seiten 329-339).

Die US 2008/144880 A1 offenbart gemäß ihrer Zusammenfassung ein Verfahren und ein System mit einem Computersystem und Bildgebungssensoren, die Bilddaten eines Objekts, beispielsweise eines Schlachtkörpers, erfassen, wenn es sich durch eine Verarbeitungsanlage bewegt und in einzelne Lebensmittelprodukte umgewandelt wird. Das Computersystem analysiert die Bilddaten, um einen "Blob" für das zu überwachende Objekt zu erzeugen. Quellinformationen, auf die mit dem zu überwachenden Objekt verwiesen wird, können dem Objekt-Blob zugeordnet werden. Der Blob kann verwendet werden, um das Objekt zu verfolgen und zu identifizieren und um festzustellen, wann ein oder mehrere zusätzliche Objekte aus dem überwachten Objekt konvertiert wurden. Das Computersystem kann Blobs für die zusätzlichen Objekte erstellen und die referenzierten Informationen den neuen Blobs zuordnen. In einer Ausführungsform ist das Computersystem in der Lage, die Quellinformationen für eine bestimmte Quelleinheit von Lebensmitteln fortlaufend umgewandelten Lebensmittelprodukten zuzuordnen, die von der Quelleinheit umgewandelt werden werden.

Die US2009/321511 offenbart eine Transportstrecke mit einem Knotenpunkt, an dem Objekte oder deren Teile identifiziert werden, um sie anschließend in verschiedene Behälter zu sortieren. Die Identifizierung erfolgt zuerst mit einem ID Lesegerät. Nur wenn dieses keine sichere Identifizierung erlaubt, wird eine Kamera eingesetzt. Das Kamera erfasst beispielsweise die Form, Muster oder Indicia des Objekts und gleicht sie mit einer Datenbank ab.

Jedoch gibt es nahezu keine Lösungen für das Problem, die Anzahl der Sensoren zu reduzieren, die für ein Tracking und Tracing im Gesamtsystem benötigt und die insbesondere für eine Materialflusssteuerung innerhalb eines Lager- und Kommissioniersystems eingesetzt werden.

Es ist daher eine Aufgabe der vorliegenden Erfindung, die oben erwähnten Nachteile durch eine entsprechende Vorrichtung und ein entsprechendes Verfahren zu überwinden.

Diese Aufgabe wird gelöst durch ein Verfahren gemäß Anspruch 1 gelöst.

Ein Vorteil der vorliegenden Erfindung, d.h. die Beeinflussung des Materialflusses am Knotenpunkt, wird vorzugsweise mit nur einer einzigen Sensortechnologie, nämlich z.B. mit der (Video-)Kamera erreicht. Die Kamera ersetzt eine Vielzahl von Sensoren (z.B. Lichttaster, Lichtschranken, etc.), die üblicherweise eingesetzt wurden. Ein weiterer Vorteil ist darin zu sehen, dass z.B. Stopppositionen, Ausschleuspositionen, Umlenkpositionen; Beschleunigungspositionen und dergleichen unabhängig von der Sensorposition aufgrund des (großen) Blick- bzw. Gesichtsfelds der Kamera erfassbar und beinflussbar sind. Hierbei geht es nicht um eine Steuerung des Materialflusses mit Kameras an sich, sondern um die Behebung eines großen Nachteils der Kamera, der darin zu sehen ist, dass die Kamera die Objekt-identifizierenden Merkmale entweder gar nicht sehen kann oder nicht ausreichend auflösen kann. Dieser Nachteil wird durch die Informationsfusion behoben, indem die verschiedenen Informationsquellen kombiniert und ausgewertet sowie zur Lösung des speziellen Problems kombiniert werden.

Die Erfindung ermöglicht ein Objekt-Tracking innerhalb des Lager- und Kommissioniersystems mit einer minimalen Anzahl von Sensoren. Es können günstige und technologisch einfache Sensoren, insbesondere preiswerte (Video-)Kamerasysteme eingesetzt werden, deren beschränktes Einsatzgebiet durch die Informationsfusion kompensiert wird

Der Sensor ist eine Kamera, wobei das mindestens eine Merkmal optisch erkennbar ist und wobei das mindestens eine Merkmal vorzugsweise ein Strichcode, eine individualisierende Farbkombination, ein individualisierendes Herstellerkennzeichen, eine individualisierende Kontur, und/oder eine individualisierende Abmessung oder Größe ist.

Diese Merkmale sind mit einer konventionellen Bildverarbeitung aus den Sensordaten extrahierbar und erkennbar. Die Bildverarbeitung kann dabei auf bekannte Bild- und Mustererkennungsverfahren zurückgreifen.

Ferner ist es bevorzugt, wenn das Blickfeld der Kamera so groß gewählt ist, dass sichtbare Strichcodes nicht auflösbar sind.

Das Blickfeld ist dann sehr groß, wobei viele der Objekte und auch viele der Knotenpunkte einschließlich der dort befindlichen Objekte simultan mit einem einzigen Sensor überwacht werden. Die Anzahl der im Gesamtsystem benötigten Sensoren verringert sich weiter. Die Auflösung der Kameras tritt in den Hintergrund, wodurch der Preis günstiger wird. Die mangelnde Auflösung wird durch die Informationsfusion kompensiert. Die Kameras werden bevorzugt zur Positions- und/oder Orientierungsbestimmung der sich nähernden Objekte benutzt.

Insbesondere umfasst die mindestens eine Informationsquelle eine Lagerverwaltungssteuerung, einen Arbeitsplatz, und/oder einen Wareneingang.

Dies sind klassische Informationsquellen, die in konventionellen Lager- und Kommissioniersystem ohnehin schon vorhanden sind.

Die Zusatzdaten umfassen für jedes der sich nähernden Objekte mindestens einen der folgenden Parameter: eine Reihenfolge, in welcher sich die Objekte dem Knotenpunkt nähern; einen Relativabstand von aufeinanderfolgenden Objekten; und einen Zeitpunkt, zu welchem ein jeweiliges Objekt dem Materialfluss hinzugefügt wurde; einen Aufgabeort, wo das jeweilige Objekt dem Materialfluss hinzugefügt wurde; einen Weg, den das jeweilige Objekt bisher durch das System zurückgelegt hat; und eine ortsabhängige Geschwindigkeit, mit der das jeweilige Objekt durch das System bewegt wird.

Bei diesen Parametern handelt es sich um Informationen, die in den meisten Fällen ohnehin bereits in dem Lager- und Kommissioniersystem bereits vorhanden sind.

Weiter ist es von Vorteil, wenn eine weitere der Informationsquellen durch eine Lichtschranke, einen Lichttaster, einen (Barcode/RFID/ NFC-)Scanner, und/oder eine Waage definiert ist.

Derartige Sensoren sind in konventionellen Lager- und Kommissioniersystemen bereits vorhanden und werden auch zukünftig zumindest an neuralgischen Materialfluss-Knotenpunkten zum Einsatz kommen.

Das Steuern des Materialflusses umfasst ein Betätigen eines Aktuators am Knotenpunkt.

In diesem Fall ist es möglich, dass das jeweilige Objekt seinen Bewegungszustand, insbesondere seine Richtung und/oder seine Geschwindigkeit, im Knotenpunkt auf eine gewünschte Weise ändert.

Des Weiteren wird optional vorgeschlagen, dass der Schritt des Prüfens umfasst: Erkennen von jedem der sich nähernden Objekte aus den Sensordaten; Extrahieren von zugehörigen Merkmalen für jedes der erkannten Objekte; und für jedes der erkannten Objekte Bestimmen, ob die extrahierten zugehörigen Merkmale die sichere Identifizierung erlauben.

Insbesondere umfasst die Informationsfusion eine Datenfusion der Sensordaten mit den Zusatzdaten, indem ein entsprechender lückenhafter Sensordatensatz, der das zur sicheren Identifizierung benötigte zugehörige Merkmal nicht umfasst, mit einem Zusatzdatensatz zusammengeführt und vervollständigt wird, wobei der Zusatzdatensatz eine Variable, insbesondere eines der Merkmale, umfasst, die sowohl im Sensordatensatz als auch im Zusatzdatensatz vorhanden ist.

Das Verfahren ferner den optionalen Schritt aufweisen: Prüfen, ob der zusammengeführte und vervollständigte Sensordatensatz eines der Merkmale umfasst, das die ausreichend sichere Identifizierung umfasst.

Insbesondere kann die ausreichend sichere Identifizierung durch einen variablen Schwellenwert für den Grad der Identifizierung definiert werden. Dieser Grad kann z.B. 60%, 70%, 80% oder 90% einer (100%) sicheren Identifizierung sein, bei der die Identifizierung eindeutig oder sogar eineindeutig ist.

Ferner wird die Aufgabe gelöst durch eine Vorrichtung gemäß Anspruch 12 gelöst.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Knotenpunkts eines Materialflusses in einem teilweise dargestellten Lager- und Kommissioniersystem;
- Fig. 2: ein Blockdiagramm eines Lager- und Kommissioniersystems;
- Fig. 3: ein Flussdiagramm eines Verfahrens zum Steuern eines Materialflusses; und
- Fig. 4: eine Draufsicht auf zwei benachbarte Knotenpunkte zum Verdeutlichen unterschiedlicher Förderszenarien.

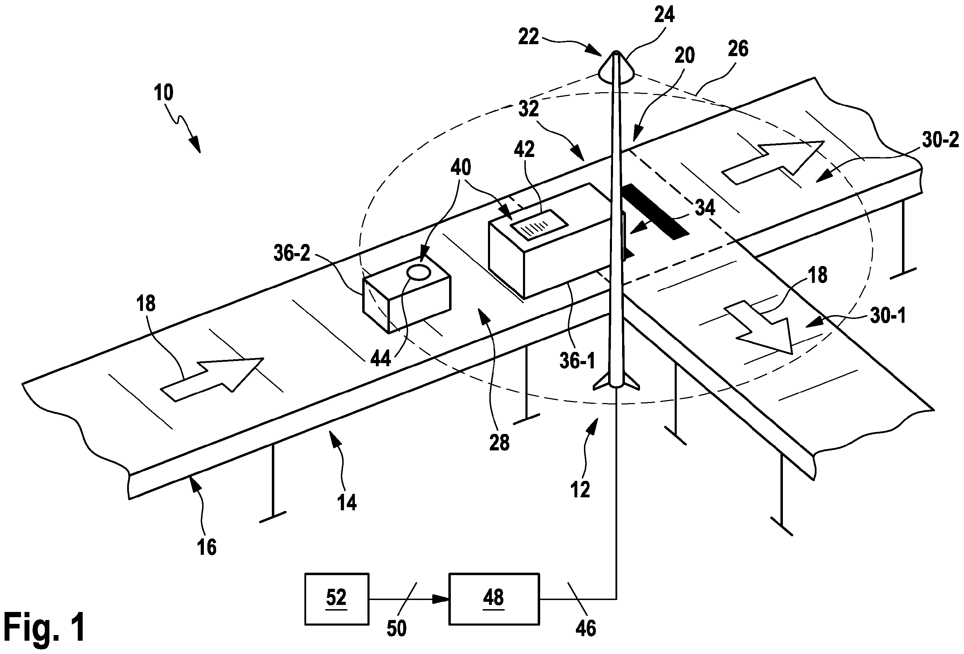

Fig. 1 zeigt eine perspektivische Ansicht eines exemplarischen (Materialfluss-)Knotenpunkts 12 in einem Lager- und Kommissioniersystem 10, das wiederum nur ausschnittsweise dargestellt ist. Der Knotenpunkt 12 ist zum Beispiel durch eine Fördertechnik 14 (z.B. Rollenförderer 16, Bandförderer oder Ähnliches) implementiert. In Fig. 1 ist ein Rollenförderer 16 auf nicht näher gezeichneten Standfüssen gezeigt. Ein Materialfluss 18 ist durch helle Pfeile auf dem Rollenförderer 16 angedeutet. Der Knotenpunkt 12 ist als (in der Draufsicht) exemplarisch T-förmiger Verzweigungspunkt 20 ausgebildet.

Ein einziger Sensor 22 zur Überwachung des Materialflusses 18 ist (z.B. stationär) am Knotenpunkt 12 angeordnet. Der Sensor 22 wird durch eine (Video-)Kamera 24 implementiert, die ein Gesichts- bzw. Blickfeld 26 aufweist, das in der Fig. 1 durch eine Strichlinie angedeutet ist und das eine z.B. kegelförmige Ausdehnung mit der Kamera 24 als Ursprung aufweist. Das Blickfeld 26 deckt vorzugsweise einen relativ großen Bereich ab, der den Knotenpunkt 12 z.B. zentral umfasst. Das Blickfeld 26 kann so dimensioniert sein, dass ein Eingangsbereich 28 (inkl. einem Fördertechnik-Eingangselement), die beiden Ausgangsbereiche 30 (inkl. den entsprechenden Fördertechnik-Ausgangselementen) sowie ein zentral angeordneter Kreuzungsbereich 32, an den die Eingangs- und Ausgangsbereiche 28 und 30 angrenzen, sicher von der Kamera 24 erfasst werden. Insbesondere werden die Bewegungen von Materialfluss-Objekten 36 erfasst, die sich dem Kreuzungsbereich 32 nähern (in der Fig.1 von links nach rechts).

Im Kreuzungsbereich 32 ist z.B. eine Aushubeinrichtung 34 in Form eines zweispurigen Riemenförderers vorgesehen, der hier nicht näher bezeichnet ist. Die Spuren bzw. Riemen des Riemenförderers sind in Zwischenräumen von (hier nicht näher gezeigten und bezeichneten) Rollen des Rollenförderers 16 angeordnet. Die Aushubeinrichtung 34 ist relativ zum Rollenförderer 16 heb- und senkbar ausgebildet. Die Riemen der Aushubeinrichtung 34 sind so orientiert, dass die Materialfluss-Objekte 36 senkrecht zur ursprünglichen Förderrichtung ausgeschleust werden können. Dazu werden die vorab tiefer liegenden Riemen zwischen den Rollen angehoben, so dass Objekte 36, die sich auf den Riemen befinden, von den Rollen angehoben werden.

Anstatt der Aushubeinrichtung 34 können auch andere Aktuatoren alternativ (oder ergänzend) vorgesehen werden. Exemplarische andere Aktuatoren sind: Ausrichteinrichtungen, Abschiebeinrichtungen, Etikettiereinrichtungen, Lifte, oder Ähnliches.

In der Fig. 1 sind exemplarisch zwei Objekte 36-1 und 36-2 im Bereich des Knotenpunkts 12 gezeigt. Es können sich auch mehr oder weniger Objekte 36 dem Knotenpunkt 12 nähern. Die Objekte 36-1 und 36-2 werden beabstandet zueinander gefördert, sie könnten aber auch gemeinsam ohne einen Abstand zueinander (als Verbund) gefördert werden. Die Objekte 36 sind hier exemplarisch als quaderförmige Gebinde gezeigt, die im vorliegenden Fall als Fördergüter ohne Ladungsträger (z.B. Tray, Behälter, Palette, oder Ähnliches) über den Rollenförderer 16 transportiert werden. Es versteht sich, dass die Objekte 36 durch jede beliebige Art von Gütern (z.B. Kommissioniergüter, Stückgüter, Gebinde, etc.) realisiert werden können, die in dem Lager- und Kommissioniersystem 10 gehandhabt werden. Die Objekte 36 können auch durch (Förder-)Güter einschließlich eines Ladungsträgers (nicht gezeigt) realisiert sein.

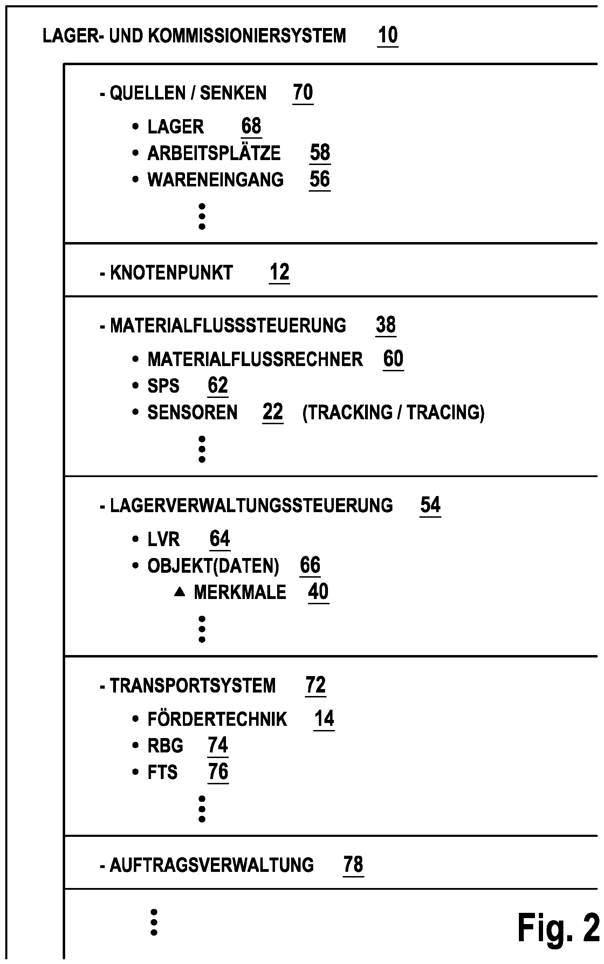

Eine wichtige Funktion des Sensors 22 ist es, den Materialfluss 18 im Bereich des Knotenpunkts 12 zu erfassen, um einer hier nicht gezeigten Materialflusssteuerung 38 (vgl. Fig. 2) Informationen zu den Objekten 36-1 und 36-2 zu liefern, um die Objekte 36 in eine jeweils gewünschte Richtung (z.B. in den Ausgangsbereich 30-1) zu lenken. Der Materialfluss 18 umfasst im Beispiel der Fig. 1 die beiden sich auf den Knotenpunkt 12 zu bewegenden Objekte 36-1 und 36-2. Der Materialfluss 16 kann unter anderem Informationen zu den Objekten 36 umfassen, wie z.B. deren aktuelle Position und Geschwindigkeit auf dem Rollenförderer. Von einem besonderen Interesse ist aber die Identität der Objekte 36-1 und 36-2.

Um die Objekte 36-1 und 36-2 am Knotenpunkt 12 richtig zu steuern, d.h. materialflusstechnisch richtig zu beeinflussen (z.B. zu einem gewünschten Zielort zu bewegen), sollten die Objekte 36 eindeutig, insbesondere eineindeutig, spätestens im Kreuzungsbereich 32 identifiziert sein. Diese Identifizierung erfolgt computergestützt in Echtzeit, insbesondere während die Objekte 36 (kontinuierlich) in den Kreuzungsbereich 32 gefördert werden.

Die Identifizierung der Objekte 36 erfolgt allgemein basierend auf Merkmalen 40, wie zum Beispiel Strichcodes 42, Herstellerkennzeichen (z.B. Logo) 44 oder dergleichen, die nachfolgend noch näher beschrieben werden und die von dem Sensor 22 bzw. der Kamera 24 optisch im Eingangsbereich 28 des Knotenpunkts 12 erfasst, ausgewertet und erkannt werden. Entsprechende Sensordaten 46 werden in Form eines Signals vom Sensor 22 an eine Auswertungseinrichtung 48 übertragen. Die entsprechende Signal- bzw. Datenübertragung kann auch drahtlos erfolgen.

Die Auswertungseinrichtung 48 wertet die Sensordaten 46 aus, indem überprüft wird, ob ein oder mehrere Merkmale 40 für jedes der erfassten Objekte 36 vorhanden sind, die eine sichere Identifizierung der jeweiligen Objekte 36 erlauben. Die Auswertungseinrichtung kann dazu eingerichtet sein, die Sensordaten 46 nach den Merkmalen 46 zu analysieren, wie es nachfolgend noch näher erläutert werden wird. Diese Analyse (Extraktion) der Merkmale 40 kann aber auch durch eine andere (nicht dargestellte) Entität durchgeführt werden. Die Auswertungseinrichtung 48 ist ferner dazu eingerichtet, eine Bewertung der aus den Sensordaten 46 gewonnenen Merkmale 40 (sofern diese überhaupt vorhanden sind) vorzunehmen, um zu bestimmen, ob die sichere Identifizierung für jedes der Objekte 36-1 und 36-2 überhaupt möglich ist.

Es gibt unterschiedliche Grade für die "sichere Identifizierung". Der Strichcode 42 erlaubt generell eine hundertprozentig sichere Identifizierung der Objekte 36, sofern der Strichcode 42 für die Kamera 24 sichtbar und auflösbar war. Das Herstellerkennzeichen 44 (z.B. ein unternehmensspezifisches Logo) resultiert nicht immer in einer hundertprozentig sicheren Identifizierung. Es ist zum Beispiel möglich, dass mehrere, hinsichtlich eines Objekttyps unterschiedliche Objekte 36 des gleichen Herstellers innerhalb des Lager- und Kommissioniersystems 10 vorhanden sind, so dass eine sichere, insbesondere eine eindeutige oder sogar eineindeutige, Identifizierung des Herstellerkennzeichens 44 noch nicht ausreicht, um den jeweiligen Typ des Objekts 36 (100%) sicher zu identifizieren.

In diesem (nicht ausreichenden) Fall erfolgt eine "ausreichend sichere" Identifizierung auf Basis einer Informationsfusion, wie es nachfolgend noch näher erläutert werden wird.

Bei einer Informationsfusion werden durch die Auswertungseinrichtung 50 zusätzlich zu den Sensordaten 46, d.h. insbesondere zusätzlich zu den daraus extrahierten Merkmalen 40, noch Zusatzdaten 50 bei der Aus- bzw. Bewertung verwendet, die von mindestens einer Informationsquelle 52 stammen, die sich vom Sensor 22 des Knotenpunkts 12 unterscheidet. Die Zusatzdaten 50 wurden vorab, insbesondere stromaufwärts relativ zum Sensor 22, erzeugt und umfassen - z.B. neben dem Herstellerkennzeichen 44 - weitere Objektmerkmale 40, die zusammen mit dem oder den Merkmalen 40 aus den Sensordaten 46 die ausreichend sichere Identifizierung für jedes der Objekte 36-1 und 36-2 erlauben. Die ausreichend sichere Identifizierung muss nicht unbedingt eine hundertprozentig sichere Identifizierung sein. Es können Schwellenwerte für den Grad der Identifizierung definiert werden (wie z.B. 60 %, 70%, 90% oder dergleichen), um die Auswertungseinrichtung 48 eine Entscheidung treffen zu lassen, in welchen der Ausgangsbereiche 30-1 und 30-2 das entsprechende Objekt 36 zu lenken ist.

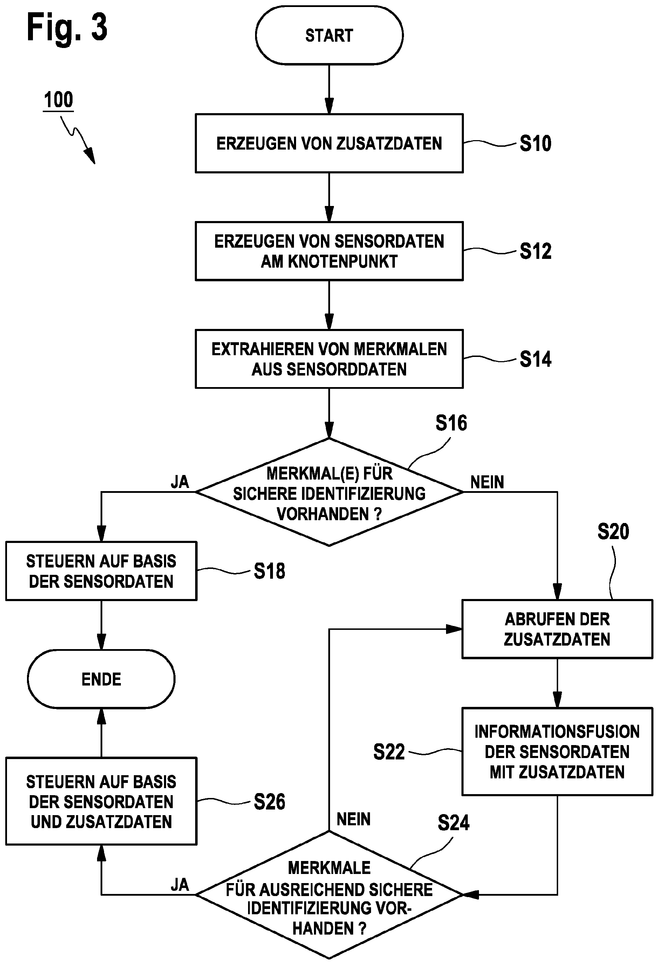

Generell ist es möglich, dass die Auswertungseinrichtung 48 z.B. für das Objekt 36-1 eine sichere Identifizierung vornehmen kann, nicht aber für das andere Objekt 36-2. In diesem Fall kann das Objekt 36-1 mit oder ohne Informationsfusion materialflusstechnisch gesteuert werden. Das Objekt 36-2 hingegen wird auf jeden Fall mittels einer Informationsfusion (auf Basis der Sensordaten 46 und der Zusatzdaten 50) materialflusstechnisch gesteuert. Die Auswertungseinrichtung 48 trifft eine derartige Entscheidung für jedes der Objekte 36-1 und 36-2, die sich dem Knotenpunkt 12 nähern, wie es unter Bezug auf Fig. 3 noch näher erläutert werden wird.

Unter dem Begriff "Informationsfusion" sind allgemein Methoden zu verstehen, mit denen Daten von unterschiedlichen Sensoren, d.h. von einer oder mehreren Informationsquellen 52, mit dem Ziel verknüpft werden, neues und präziseres Wissen über Mess- bzw. Erfassungswerte (hier die in den Sensordaten 46 enthaltenen Bilder) und Ereignisse zu gewinnen. Die Informationsfusion kann eine Sensorfusion, eine Datenfusion sowie ein verteiltes Erfassen bzw. Messen umfassen. Grundprinzipien der Informationsfusion sind seit langem bekannt und werden weiter unten noch genauer beschrieben werden.

Die Informationsfusion wird verwendet, um die Objekte 36 am Knotenpunkt 12 materialflusstechnisch zu steuern (z.B. umleiten, anhalten, beschleunigen, ausrichten, etc.), deren zugehörige Merkmale 40, die objekt-spezifisch bzw. (eindeutig) individualisierend sind, entweder gar nicht oder nicht ausreichend genau durch den Sensor 22 erfassbar sind. Das Objekt 36-1 könnte zum Beispiel mit genau der Seite auf dem Rollenförderer 16 stehen, auf welcher der Strichcode 42 angebracht ist, der die sichere Identifizierung erlaubt. In diesem Fall würde die Kamera 24 den Strichcode 42 aber nicht erfassen können. In einem anderen Fall könnte die Auflösung der Kamera 24 nicht ausreichend sein, um den (dennoch sichtbaren) Strichcode 42 verwertbar zu machen. Die Auflösung des Sensors 22 hängt unter anderem von der Größe des Blickfelds 26 ab. Vorzugsweise wird die Größe des Blickfelds 26 sehr groß gewählt, um so wenige Sensoren 22 wie möglich im Gesamtsystem 10 zu benutzen. Das Blickfeld 26 ist vorzugsweise zumindest so groß, dass der Eingangsbereich 28 und die beiden Ausgangsbereiche 30-1 und 30-2 umfasst sind. Es ist aber auch möglich, das Blickfeld 26 noch größer zu wählen, so dass zum Beispiel mehrere Knotenpunkte 12 gleichzeitig durch den gleichen Sensor 22 erfasst werden.

Die eine Informationsquelle 52 wird durch die Materialflusssteuerung 38 (vgl. Fig. 2) implementiert. Im Beispiel der Fig. 1 besitzt die (nicht gezeigte) Materialflusssteuerung 38 beispielsweise Informationen darüber, dass das kleinere, zweite Objekt 36-2 an einem hier nicht näher gezeigten und bezeichneten Aufgabepunkt (z.B. im Wareneingang 56 oder an einem Arbeitsplatz 58, vgl. Fig. 2) zeitlich nach dem ersten Objekt 36-1 auf den Rollenförderer 16 bewegt wurde. Somit liegen möglicherweise (ergänzende) Informationen zu einem geometrischen Relativabstand und einer Reihenfolge der Objekte 36-1 und 36-2 vor. Im Wareneingang 56 oder am Arbeitsplatz 58 wurden beide Objekte 36-1 und 36-2 eindeutig - und somit sicher - identifiziert, indem beispielsweise deren jeweiliger Strichcode 42 (Strichcode 42 des zweiten Objekts 36-2 ist in Fig. 1 nicht zu sehen), zum Beispiel mit einem hier nicht näher gezeigten und bezeichneten Handscanner, gelesen wurden. Der Scanner kann von einer Person bedient worden sein, die die Objekte 36-1 und 36-2 auf den Rollenförderer 16 gelegt hat. Alternativ könnte auch eine weitere Kamera 24 am Ort des Wareneingangs 56 oder des Arbeitsplatzes 58 eingesetzt worden sein, um die Objekte 36-1 und 36-2 dort eindeutig und sicher zu identifizieren (z.B. weil dort beide Strichcodes 42 sichtbar und auflösbar waren). Der zeitliche Abstand, der zwischen dem Auflegen des ersten Objekts 36-1 und dem Auflegen des zweiten Objekts 36-2 auf den Rollenförderer 16 vergangen ist, stellt eine weitere exemplarische Information bzw. ein Merkmal 40 für das spezielle Objektpaar 36-1/36-2 dar, die bzw. das beim Identifizieren der jeweiligen Objekte 36-1 und 36-2 durch die Auswertungseinrichtung 48 benutzt werden kann.

Ferner kann in einem Materialflussrechner 60 (vgl. Fig. 2) und/oder in untergeordneten Steuerungseinheiten, wie zum Beispiel einer speicherprogrammierbaren Steuerung (SPS) 62 eines hier nicht näher gezeigten und bezeichneten Fördermoduls, die Reihenfolge hinterlegt sein, in welcher die Objekte 36-1 und 36-2 stromabwärts zum Knotenpunkt 12 transportiert werden.

Die Lagerverwaltungssteuerung 54 (vgl. Fig. 2) ist üblicherweise durch einen Lagerverwaltungsrechner (LVR) 64 implementiert. Die Lagerverwaltungssteuerung 54 verwaltet objektspezifische Daten bzw. Objektdaten 66, die als die Zusatzdaten 50 verwendbar sind. Die Objektdaten 66 umfassen die (objektspezifischen bzw. zugehörigen) Merkmale 40. Die Merkmale 40 stellen eine oder mehrere der nachfolgend genannten Variablen bzw. Parameter dar: ein Gewicht, eine Gestalt oder äußere Kontur, eine Abmessung, eine Verpackung (z.B. Karton, Plastikfolie, etc.), eine Farbe, ein Muster, und/oder das Herstellerkennzeichen 44. Es versteht sich, dass weitere Merkmalstypen, Variablen bzw. Parameter berücksichtigt werden können und die obige Aufzählung nicht abschließend ist.

Weitere Informationen können zum Beispiel aus einem hier nicht näher bezeichneten Lagerort eines der Objekte 36 in einem Lager 68 (vgl. Fig. 2) gewonnen werden. Das Lager 68 stellt eine materialflusstechnische Quelle/Senke 70 für die Objekte 36 innerhalb des Lager- und Kommissioniersystems 10 der Fig. 2 dar. In einer Lagerverwaltung-Software sind Informationen darüber hinterlegt, welche der Objekte 36 in welchem Lagerort innerhalb des Lagers 68 bevorratet sind. Wenn die Lagerverwaltungssteuerung 54 zum Beispiel einen Behälter aus dem Lager 68 auslagert, der mehrere Objekte 36 enthält, die dem Typ des ersten Objekts 36-1 entsprechen, so kann es zum Beispiel ausreichen, diesen Behälter mittels der Materialflusssteuerung 38 zu verfolgen (Tracking/Tracing), während er durch das Lager- und Kommissioniersystem 10 mittels eines Transportsystems 72 transportiert wird, um später eine sichere Identifizierung zu erlauben. Der Rollenförderer 16 kann ein Teil des Transportsystems 72 sein. Das Transportsystem 72 kann ferner Regalbediengeräte (RBG) 74, fahrerlose Transportsysteme (FTS) 76 und dergleichen umfassen. Der Materialfluss 18 kann mittels weiterer Sensoren 22 stromaufwärts und/oder stromabwärts zum Knotenpunkt 12 der Fig. 1 verfolgt werden. Diese Sensoren 22 können vom gleichen Typ oder von einem anderen Typ sein. Ein anderer Sensortyp könnte zum Beispiel durch eine Waage zum Bestimmen des Gewichts des jeweiligen Objekts 36 implementiert sein.

Eine Auftragsverwaltung 78 (vgl. Fig. 2) stellt eine weitere potentielle Informationsquelle 52 dar. Aus den entsprechenden Daten der Auftragsverwaltung 78 können ebenfalls Informationen über den Materialfluss 18 am Knotenpunkt 12 gewonnen bzw. extrahiert werden, wie es nachfolgend exemplarisch beschrieben ist. Ein spezifischer Auftrag umfasst beispielsweise fünf Objekte 36, die sich in einer oder mehreren entsprechenden Auftragszeilen widerspiegeln. Vier Objekte 36 dieser fünf Objekte 36 wurden bereits am Knotenpunkt 12 erkannt. Unter der weiteren Voraussetzung, dass der Materialfluss 18 auftragsorientiert erfolgt, d.h. dass die Objekte 36 zu diesem speziellen Auftrag immer als Gruppe transportiert werden, kann so über die oben erwähnte Informationsfusion herausgefunden werden, um welches Objekt 36 es sich bei dem nicht identifizierbaren Objekt handelt. Es muss sich um das fünfte Objekt 36 dieses Auftrags handeln.

Das Ziel der vorliegenden Erfindung, d.h. die Beeinflussung des Materialflusses 18 am Knotenpunkt 12, wird mit nur einer einzigen Sensortechnologie, nämlich z.B. mit der (Video-)Kamera 24 erreicht. Die Kamera 24 ersetzt eine Vielzahl von Sensoren (z.B. Lichttaster, Lichtschranken, etc.), die üblicherweise eingesetzt wurden. Ein weiterer Vorteil ist darin zu sehen, dass z.B. Stopppositionen, Ausschleuspositionen, Umlenkpositionen und dergleichen unabhängig von der Sensorposition aufgrund des (großen) Blick- bzw. Gesichtsfelds 26 der Kamera 24 erfassbar und beinflussbar sind. Hierbei geht es nicht um eine Steuerung des Materialflusses 18 mit Kameras 24 an sich, sondern um die Behebung eines großen Nachteils der Kamera 24, der darin zu sehen ist, dass die Kamera 24 die Objekt-identifizierenden Merkmale 40 entweder gar nicht sehen kann oder nicht ausreichend auflösen kann. Dieser Nachteil wird durch die Informationsfusion behoben, indem die verschiedenen Informationsquellen 52 kombiniert und ausgewertet sowie zur Lösung des speziellen Problems kombiniert werden.

Im Ergebnis kann für ein Objekt 36, das auf konventionelle Weise nicht (bloß durch die Kamera 24) erkennbar bzw. identifizierbar war, eine Steuerungsentscheidung (z.B. Wegentscheidung, Stoppentscheidung, etc.) getroffen werden. Die technologischen Anforderungen an die Sensoren (z.B. Bildauflösung, Bildverarbeitung und dergleichen) sinken. Dadurch können generell Kameras 24 eingesetzt werden, die wesentlich preisgünstiger sind und schon mit der heutigen Technologie realisierbar sind.

Es versteht sich, dass die hier beschriebene Technologie auch an Arbeitsplätzen 58 (z.B. Kommissionierarbeitsplätzen) oder im Wareneingang 56 oder im Warenausgang eingesetzt werden kann. Die Technologie kann sogar bei Staustrecken eingesetzt werden, wo die Objekte an vorbestimmten Punkten auf der Fördertechnik 14 (phasenweise) angehalten werden, um zum Beispiel Lücken zwischen benachbarten Objekten 36 zu schließen oder um Lücken zwischen benachbarten Objekten 36 zu generieren.

Ein weiterer Aspekt der beschriebenen Technologie ist in einer Visualisierung zu sehen. Sowohl das gesamte Lager- und Kommissioniersystem 10 als auch lediglich Teile davon können visualisiert werden. Störungen (wie z.B. ein Stau auf dem Rollenförderer 16) lassen sich so auf eine einfache Weise visualisieren. In diesem Fall ist es sogar möglich, die gestauten Objekte 36 eindeutig identifizierbar zu visualisieren. Der Materialfluss 18 umfasst generell Informationen über Transportvorgänge und -abläufe sowie Lagerungen und ungewollte Aufenthalte aller Objekte 36 im System 10. Mittels einer Materialflussanalyse können Schwachstellen im Materialfluss 18 erkannt werden und deren Ursachen erforscht werden. Die grafische Darstellung (Visualisierung) des Materialflusses 18 dient einer Hervorhebung und Verdeutlichung von Verhältnissen und Abläufen, um spezifische Daten und Schwachstellen aufzuzeigen und leichter beurteilen zu können. Die grafische Darstellung bietet den Vorteil einer besseren Übersichtlichkeit und gewährleistet ein schnelles Aufnehmen des Wesentlichen.

In einer weiteren Alternative muss der Sensor 22 der Fig. 1 nicht ortsfest installiert sein. Der Sensor 22 kann zum Beispiel auf einem beweglich gelagerten Arm befestigt sein, um den Sensor 22 in einen Bereich des Systems 10 zu bewegen, der zu einem bestimmten Zeitpunkt von einem besonderen Interesse ist. Der Sensor 22 könnte zum Beispiel auch auf einer Drohne befestigt werden. In diesem Fall wäre es möglich, schnell und flexibel materialflusstechnische Probleme zu lösen, die bisher den Einsatz von Menschen vor Ort erfordert haben.

Nachfolgend wird nochmals die Informationsfusion näher betrachtet. Zur Implementierung der Informationsfusion kann in der Auswertungseinrichtung 48 künstliche Intelligenz bzw. ein neuronales Netz eingesetzt werden.

Unter der oben bereits erwähnten Datenfusion wird im vorliegenden Fall eine Zusammenführung und Vervollständigung lückenhafter Datensätze verstanden. Die Datenfusion ist ein Bestandteil einer Informationsintegration. Ein "Spenderdatensatz" (Zusatzdaten 50) liefert ergänzende Daten für einen "Empfängerdatensatz" (Sensordaten 46). Der Spenderdatensatz besteht zum Beispiel aus den Variablen (G, S) und der Empfängerdatensatz aus den Variablen (G, E). Die gemeinsame Variable G liegt also in beiden Datensätzen vor, während die Spendervariable S und die Empfängervariable E jeweils nur in einem der Datensätze vorliegen. Auf Basis des Spenderdatensatz wird ein Modell zur Berechnung des Werts S aus der Variable G erstellt. Dieses Modell wird auf den Empfängerdatensatz angewandt, so dass ein neuer fusionierter Datensatz entsteht (G, E, S). In diesem Zusammenhang können statistische Verfahren verwendet werden. Bei der Datenfusion können mehrere zum Teil unvollständige Datensätze kombiniert werden. Als Variablen werden vorzugsweise die Merkmale 40 benutzt. Bevor die Fusion von Daten zweier Informationsquellen 52 möglich ist, müssen die Daten gegebenenfalls auf ein gemeinsames Schema gebracht werden. Nicht vorhandene Attribute bzw. Variablen können mit Null (für "kein Wert") aufgefüllt werden. In der Regel ist aber ein gemeinsames Identifizieren des Attributs als Identifikator notwendig. Mit einem Merge-Operator lassen sich z.B. auch über Kreuz liegende unvollständige Datensätze zusammenführen.

Ferner kann es vorkommen, dass zusätzlich ein Datensatz von einem anderen Sensor mit dem Datensatz des Sensors 22 fusioniert wird. Man spricht dann von einer Sensordatenfusion. Bei der Sensordatenfusion werden allgemein Ausgabedaten von mehreren Sensoren bzw. Informationsquellen 52 verknüpft. Ziel ist es, Informationen einer besseren Qualität zu gewinnen. Eine bessere Qualität bedeutet, dass die Objekte 36 am Knotenpunkt 12 sicher identifizierbar, und insbesondere besser klassifizierbar, sind. Auf diese Weise kann eine Zuverlässigkeit der Materialflusssteuerung 38 durch die Verwendung von mehreren der Informationsquellen 52 in der Regel erhöht werden. Bei einer Verwendung von unterschiedlichen Sensortypen erhöht sich auch die Erfassungswahrscheinlichkeit insgesamt. Dies bedeutet, dass die Objekte 36 auch dann erkannt werden können, wenn einzelne Sensoren, die sich vom Sensor 22 unterscheiden, aufgrund von Umweltbedingungen in ihrer Wahrnehmung eingeschränkt oder "blind" sind. Um die Identifizierbarkeit zu erhöhen, sollten die Messfehler der Sensoren nicht miteinander korrelieren, sondern gewissen Wahrscheinlichkeitsdichtefunktionen genügen (z.B. Normalverteilung) oder anders identifizierbar und quantisierbar sein. Da Sichtbereiche (z.B. das Blickfeld 26) der Sensoren üblicherweise beschränkt sind, vergrößert die Verwendung mehrerer Sensoren den Sichtbereich des Gesamtsystems entsprechend. Eine mehrdeutige Identifizierung lässt sich einfacher auflösen. Zusätzliche Sensoren liefern oft zusätzliche Informationen und erweitern so das Wissen des Gesamtsystems. Die Sensordatenfusion kann auch zur Kostenreduktion führen, weil zum Beispiel mehrere günstigere Sensoren einen besonders teuren Sensor ersetzen.

Unter Bezugnahme auf Fig. 3 wird nachfolgend ein Flussdiagramm eines Verfahrens zum Steuern des Materialflusses 18 im Lager- und Kommissioniersystem 10 am sensorgesteuerten Knotenpunkt 12 des Materialflusses 18 beschrieben, wo eine Entscheidung über eine zukünftige Materiaflussrichtung und/oder über eine Geschwindigkeit des Materialflusses 18 zu treffen ist.

In einem Schritt S10 werden (vorab) die Zusatzdaten 50 erzeugt. Es werden ein oder mehrere (Daten-)Sätze von Zusatzdaten 50 durch eine oder mehrere der Informationsquellen 52 erzeugt, die sich vom Sensor 22 des Knotenpunkts 12 unterscheiden. Die Zusatzdaten 52 werden zeitlich vorab erzeugt, um später die Informationsfusion mit den Sensordaten 46 durchführen zu können, wie es nachfolgend noch näher erläutert werden wird. Der Schritt S10 ist optional. Es versteht sich, dass die Zusatzdaten 50 nicht explizit erzeugt werden müssen, sondern auch bereits als Datensätze im System 10 vorhanden sein können.

In einem Schritt S12 werden die Sensordaten 46 am Knotenpunkt 12 erzeugt. Die Sensordaten 46 werden vom Sensor 22 erzeugt, indem die Objekte 36 im Blickfeld 26 des Sensors 22, der durch die (einzige) Kamera 24 implementiert ist, erfasst werden.

In einem Schritt S14 werden die Merkmale 40 der erfassten Objekte 36 aus den Sensordaten 46 durch die Auswertungseinrichtung 48 gewonnen, d.h. extrahiert. Bei der Extraktion wird vorzugsweise eine Bilderkennung durchgeführt. Die Bilderkennung ist ein Teilgebiet der Mustererkennung und der Bildverarbeitung. Bei der Mustererkennung werden Regelmäßigkeiten, Wiederholungen, Ähnlichkeiten und/oder Gesetzmäßigkeiten in der Menge der Sensordaten 46 erkannt. Insbesondere werden die oben genannten Parameter (z.B. Strichcode 42, Herstellerkennzeichen 44, Abmessungen, Farbmuster, Verpackungstypen und dergleichen) der Objekte 36 erkannt, die sich dem Knotenpunkt 12 stromabwärts nähern und die in das Blickfeld 26 des Sensors 22, und insbesondere in den Eingangsbereich 28 des Knotenpunkts 12, eintreten. Ein zentraler Punkt ist in diesem Zusammenhang das Erkennen der Muster, d.h. insbesondere der Merkmale 40, die allen Objekten 36 einer Kategorie gemeinsam sind und die diese Objekte 36 vom Inhalt anderer Kategorien unterscheiden.

Bei der Bildverarbeitung werden die Sensordaten 46 verarbeitet, die (Einzel-)Bilder aus Videodaten der Kamera 24 sein können. Das Ergebnis der Bildverarbeitung kann eine Menge von Merkmalen 40 des Eingabebilds sein. In den meisten Fällen werden die Bilder als zweidimensionales Signal betrachtet, so dass übliche Methoden aus der Signalverarbeitung angewandt werden können. Die Objekte 36 können zum Beispiel vermessen werden. Eine Position der Objekte 36 relativ zum Rollenförderer 16 kann bestimmt werden. Ein Relativabstand zwischen benachbarten Objekten 36 kann vermessen werden. Der Strichcode 42 kann "vermessen" und damit erkannt werden. Mittels der Bildverarbeitung können also aus den Bildern codierte Informationen (Strichcode 42) automatisiert ausgelesen werden, um die Objekte 36 zu identifizieren.

Im Schritt S16 wird - zum Beispiel über einen Merkmalsvergleich - geprüft, ob das oder die extrahierten Merkmale 40 für die sichere Identifizierung der jeweils erfassten Objekte 36 vorhanden sind. Wenn diese Merkmale 40 vorhanden sind, wird der Materialfluss 18, vorzugsweise ausschließlich, auf Basis der Sensordaten 46 gesteuert, wie im Schritt S18 gezeigt. Anderenfalls werden im Schritt S20 die Zusatzdaten 50 abgerufen, die wiederum ergänzende Merkmale 40 umfassen.

In einem Schritt S22 erfolgt dann die oben erwähnte Informationsfusion der Sensordaten 46 mit den Zusatzdaten 50. Anschließend wird in einem Schritt S24 geprüft, ob nun Merkmale 40 für eine ausreichend sichere Identifizierung vorliegen. Kann noch keine ausreichend sichere Identifizierung vorgenommen werden, so werden weitere Zusatzdaten 50 abgerufen, indem man zum Schritt S20 zurückkehrt, und weitere Zusatzdaten 50 von weiteren Informationsquellen 52 berücksichtigt. Anderenfalls wird der Materialfluss 18 auf Basis einer Kombination der Sensordaten 46 und der Zusatzdaten 50 gesteuert.

Damit endet das Verfahren 100.

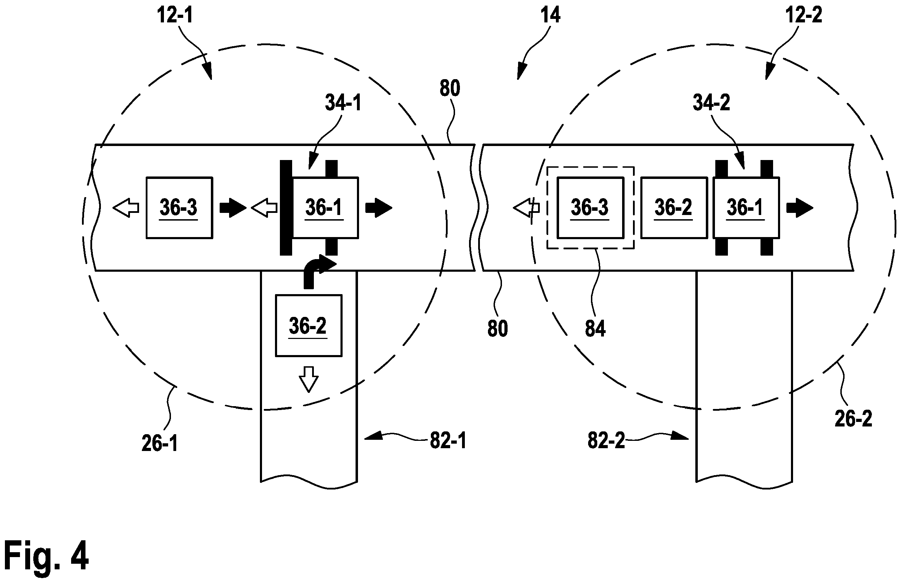

Fig. 4 zeigt eine schematische Draufsicht auf einen Abschnitt einer Fördertechnik 14, die z.B. durch eine Hauptstrecke 80 und zwei Nebenstrecken 82-1 und 82-2 gebildet wird. Die Nebenstrecken 82 erstrecken sich senkrecht zur Hauptstrecke 80 und können als Zuführförderer und/oder Abführförderer eingesetzt werden. Die Bereiche, wo die Hauptstrecke 80 mit den Nebenstrecken 82 verbunden ist, stellen die Knotenpunkte 12-1 und 12-2 dar. Jeder der Knotenpunkte 12-1 und 12-2 wird von einer nicht näher gezeigten Kamera 24 überwacht. In der Fig. 4 sind die entsprechenden Blickfelder 26-1 und 26-2 mittels (exemplarisch) kreisförmigen Strichlinien angedeutet. Die Blickfelder 26-1 und 26-2 sind so groß gewählt, dass jeweils die oben erwähnten Bereiche 28-32 der Knotenpunkte 12-1 und 12-2 erfasst werden, die hier ebenfalls nicht näher gezeigt sind. Im Kreuzungsbereich 32 des linken Knotenpunkts 12-1 ist z.B. eine Aushubeinrichtung 34-1 der oben beschrieben Art vorgesehen. Der Bereich des rechten Knotenpunkts 12-2 umfasst exemplarisch eine Waage 84, die durch ein Strichlinien-Rechteck angedeutet ist, als einen weiteren Sensor 22 neben der Kamera 24. Ferner ist eine weitere Aushubeinrichtung 34-2 vorgesehen.

Anhand dunkler und heller Pfeile sind in Fig. 4 beispielhaft zwei unterschiedliche Szenarien dargestellt. In einem ersten Szenario werden die dunklen Pfeile betrachtet. Die Objekte 36-1 bis 36-3 werden von links nach rechts transportiert, wobei der Knotenpunkt 12-1 zu einem ersten Zeitpunkt gezeigt ist und der Knotenpunkt 12-2 zu einem späteren zweiten Zeitpunkt gezeigt ist. In einem zweiten Szenario werden die helle Pfeile betrachtet, wobei die Objekte 36 von rechts nach links transportiert werden und der Knotenpunkt 12-2 eine Momentaufnahme zeigt, die zeitlich früher als die Momentaufnahme am Knotenpunkt 12-1 ist. In beiden Szenarien werden dabei jeweils mehrere Informationsquellen genutzt, um eine Identifikation der Fördergüter zu erreichen. Diese werden mit den Bildverarbeitungsinformationen der Kameras 24 synchronisiert, unter anderem um die Motoren und ggf. andere Aktoren an den jeweiligen Knotenpunkten 12-1 und 12-2 anzusteuern. Dies bedeutet, dass über die Kamera(s) und die dadurch u.a. gewonnene zeitliche Synchronisation zwischen Objekten 36 und Orten auch eine Synchronisation der Sensordaten erfolgt.

### Bezugszeichenliste

| | | | |
|---|---|---|---|
| 10 | Lager- und Kommissioniersystem | 70 | Quelle/Senke |
| 12 | Knotenpunkt | 72 | Transportsystem |
| 14 | Fördertechnik | 74 | RGB |
| 16 | Rollenförderer | 76 | FIS |
| 18 | Materialfluss | 78 | Auftragsverwaltung |
| 20 | Verzweigungspunkt | 80 | Hauptstrecke |
| 22 | Sensor | 82 | Nebenstrecke |
| 24 | Kamera | 84 | Waage |
| 26 | Blickfeld | | |
| 28 | Eingangsbereich | | |
| 30 | Ausgangsbereich | | |
| 32 | Kreuzungsbereich | | |
| 34 | Aushubeinrichtung | | |
| 36 | (Materialfluss-)Objekt | | |
| 38 | Materialflusssteuerung | | |
| 40 | Merkmal | | |
| 42 | Strichcode | | |
| 44 | Herstellerkennzeichen | | |
| 46 | Sensordaten | | |
| 48 | Auswertungseinrichtung | | |
| 50 | Zusatzdaten | | |
| 52 | Informationsquelle | | |
| 54 | Lagerverwaltungssteuerung | | |
| 56 | Wareneingang | | |
| 58 | Arbeitsplatz | | |
| 60 | Materialflussrechner | | |
| 62 | SPS | | |
| 64 | LVR | | |
| 66 | Objektdaten/objektiv-spezifische Daten | | |
| 68 | Lager | | |

## Patentansprüche

1. Verfahren zum Steuern eines Materialflusses (18) in einem Lager- und Kommissioniersystem (10), das eine Materialflusssteuerung (38) umfasst, an einem sensorgesteuerten Knotenpunkt (12) des Materialflusses (18), wo sich der Materialfluss stromabwärts in mindestens zwei ausgangsseitige Richtungen aufteilt und wo eine Entscheidung über eine zukünftige Materialfluss-Richtung zu treffen ist, wobei der Knotenpunkt durch eine Fördertechnik implementiert ist, wobei zumindest ein Eingangsbereich (28) des Knotenpunkts (12) von einem Erfassungsfeld (26) eines einzigen Sensors (22), der eine Kamera (24) ist, erfasst wird, mit den Schritten:
mittels des Sensors (22) Erzeugen (S10) von Sensordaten (46), die den Materialfluss (18), der durch ein oder mehrere Materialfluss-Objekte (36) definiert ist, das bzw. die sich dem Knotenpunkt (12) stromabwärts nähern, in dem Erfassungsfeld (26) des Sensors (22) repräsentieren;
Prüfen (S16), ob die Sensordaten (46) für jedes der sich nähernden Objekte (36-1, 36-2) mindestens ein zugehöriges Objekt-Merkmal (40) umfassen, das eine sichere Identifizierung des entsprechenden Objekts (36) erlaubt; und
wenn die Sensordaten (46) für jedes der Objekte (36-1, 36-2) das mindestens eine zugehörige Merkmal (40) umfassen, das die sichere Identifizierung erlaubt, Steuern (S18) des Materialflusses (18) an dem Knotenpunkt (12) auf Basis der Sensordaten (46); oder
wenn die Sensordaten (46) nicht für jedes der sich nähernden Objekte (36-1, 36-2) das mindestens eine zugehörige Merkmal (40) umfassen, das die sichere Identifizierung erlaubt (S16), Steuern (S26) des Materialflusses (18) an dem Knotenpunkt (12) zumindest für solche der Objekte (36-1, 36-2), deren zugehöriges Merkmal (40) von den Sensordaten (46) nicht umfasst ist, auf Basis einer Informationsfusion (S22) der Sensordaten (46) mit vorab erzeugten Zusatzdaten (50), die von mindestens einer Informationsquelle (52) stammen, die sich von dem Sensor (22) des Knotenpunkts (12) unterscheidet und die die Materialflusssteuerung (38) ist, wobei die Zusatzdaten (50) weitere Objekte-Merkmale (40) umfassen, die zusammen mit den Merkmalen (40) aus den Sensordaten (46) eine ausreichend sichere Identifizierung erlauben (S24),
wobei das Steuern des Materialflusses (18) ein Sensordaten-synchronisiertes Betätigen eines Aktuators, der beim Knotenpunkt (12) vorgesehen ist, umfasst, so dass das jeweilige Objekt (36) seine Bewegungsrichtung ändert,
wobei die Zusatzdaten (50) für jedes der sich nähernden Objekte (36) mindestens einen der folgenden Parameter umfassen:
eine Reihenfolge, in welcher sich die Objekte (36) dem Knotenpunkt (12) nähern;
einen Relativabstand von aufeinanderfolgenden Objekten (36); und
einen Zeitpunkt, zu welchen ein jeweiliges Objekt (36) dem Materialfluss (18) hinzugefügt wurde;
einen Aufgabeort, wo das jeweilige Objekt (36) dem Materialfluss (18) hinzugefügt wurde;
einen Weg, den das jeweilige Objekt (36) bisher durch das System (10) zurückgelegt hat; und
eine ortsabhängige Geschwindigkeit, mit der das jeweilige Objekt (36) durch das System (10) bewegt wird.

2. Verfahren nach Anspruch 1, wobei das mindestens eine Merkmal (40) optisch erkennbar ist.

3. Verfahren nach Anspruch 2, wobei das mindestens eine Merkmal (40) ein Strichcode (42), eine individualisierende Farbkombination, ein individualisierendes Herstellerkennzeichen (44), eine individualisierende Kontur, und/oder eine individualisierende Abmessung oder Größe ist.

4. Verfahren nach einem der Ansprüche 1 bis 3, wobei das Blickfeld (26) der Kamera (24) so groß gewählt ist, dass sichtbare Strichcodes (42) nicht auflösbar sind.

5. Verfahren nach einem der Ansprüche 1 bis 4, wobei eine weitere der Informationsquellen (52) eine Lichtschranke, ein Lichttaster, ein Scanner, und/oder eine Waage ist.

6. Verfahren nach einem der Ansprüche 1 bis 5, wobei das Steuern des Materialflusses (18) das Sensordaten-synchronisierte Betätigen des Aktuators, der beim Knotenpunkt (12) vorgesehen ist, (12) umfasst, so dass das jeweilige Objekt (36) seine Bewegungsgeschwindigkeit ändert.

7. Verfahren nach einem der Ansprüche 1 bis 5, wobei das Prüfen (S16) umfasst:
Erkennen von jedem der sich nähernden Objekte (36) aus den Sensordaten (46);
Extrahieren von zugehörigen Merkmalen (40) für jedes der erkannten Objekte (36); und
für jedes der erkannten Objekte (36) Bestimmen, ob die extrahierten zugehörigen Merkmale (40) die sichere Identifizierung erlauben.

8. Verfahren nach einem der Ansprüche 1 bis 7, wobei die Informationsfusion (S22) eine Datenfusion der Sensordaten (46) mit den Zusatzdaten (50) umfasst, indem ein entsprechender lückenhafter Sensordatensatz, der das zur sicheren Identifizierung benötigte zugehörige Merkmal (40) nicht umfasst, mit einem Zusatzdatensatz zusammengeführt und vervollständigt wird, wobei der Zusatzdatensatz eine Variable umfasst, die sowohl im Sensordatensatz als auch im Zusatzdatensatz vorhanden ist.

9. Verfahren nach Anspruch 8, wobei der Zusatzdatensatz eines der Merkmale (40) umfasst, die sowohl im Sensordatensatz als auch im Zusatzdatensatz vorhanden ist.

10. Verfahren nach Anspruch 8 oder 9, das ferner den Schritt aufweist:
Prüfen, ob der zusammengeführte und vervollständigte Sensordatensatz eines der Merkmale (40) umfasst, das die ausreichend sichere Identifizierung umfasst.

11. Verfahren nach einem der Ansprüche 1 bis 10, wobei der Schritt des Steuerns (S18, S26) des Materialflusses (18) am Knotenpunkt (12) ein synchronisiertes Steuern von zumindest einem Aktuator (34) umfasst, der innerhalb des Bereiches des Knotenpunkts (12) vorgesehen ist.

12. Vorrichtung zum Steuern eines Materialflusses (18) in einem Lager- und Kommissioniersystem (10), das eine Materialflusssteuerung (38) umfasst, an einem sensorgesteuerten Knotenpunkt (12) des Materialflusses (18), wo sich der Materialfluss stromabwärts in mindestens zwei ausgangsseitige Richtungen aufteilt und wo eine Entscheidung über eine zukünftige Materialfluss-Richtung zu treffen ist, wobei der Knotenpunkt durch eine Fördertechnik implementiert ist und wobei die Vorrichtung aufweist:
einen einzigen Sensor (22) am Knotenpunkt, der eine Kamera (24) ist und der ein Blickfeld (26) aufweist, wobei der Sensor (22) so positioniert ist, dass das Blickfeld (26) zumindest einen Eingangsbereich (28) des Knotenpunkts (12) erfasst, wo sich ein oder mehrere Materialfluss-Objekte (36) gleichzeitig stromabwärts dem Knotenpunkt (12) nähern, wobei der Sensor (22) entsprechende Sensordaten (46) erzeugt;
mindestens eine Informationsquelle (52) für eine Informationsfusion der Sensordaten (46) mit vorab erzeugten Zusatzdaten (50), die von der mindestens einen Informationsquelle (52) stammen, wobei sich die mindestens eine Informationsquelle (52) von dem Sensor (22) am Knotenpunkt (12) unterscheidet und die Materialflusssteuerung (38) ist; und
eine Auswertungseinrichtung (48), die eingerichtet ist:
zu prüfen, ob die Sensordaten (46) für jedes der sich nähernden Objekte (36-1, 36-2) mindestens ein zugehöriges Objekt-Merkmal (40) umfassen, das eine sichere Identifizierung des entsprechenden Objekts (36) erlaubt; und
wenn die Sensordaten (46) für jedes der Objekte (36-1, 36-2) das mindestens eine Merkmal (40) umfassen, ein Signal zum Steuern des Materialflusses (18) an dem Knotenpunkt (12) auf Basis der Sensordaten (46) auszugeben; oder
wenn die Sensordaten (46) nicht für jedes der sich nähernden Objekte (36-1, 36-2) das mindestens eine Merkmal (40) umfassen, ein Signal zum Steuern des Materialflusses (18) an dem Knotenpunkt (12) zumindest für solche der Objekte (36-1, 36-2), deren zugehöriges Merkmal (40) von den Sensordaten (46) nicht umfasst ist, auf Basis einer Informationsfusion der Sensordaten (46) mit Zusatzdaten (50) auszugeben, die von der mindestens einen Informationsquelle (52) stammen, wobei die Zusatzdaten (50) weitere Objekte-Merkmale (40) umfassen, die zusammen mit den Merkmalen (40) aus den Sensordaten (46) eine ausreichend sichere Identifizierung erlauben; und
die Informationsfusion durchzuführen;
wobei das Steuern des Materialflusses (18) ein Sensordaten-synchronisiertes Betätigen eines Aktuators, der beim Knotenpunkt (12) vorgesehen ist, (12) umfasst, so dass das jeweilige Objekt (36) seine Bewegungsrichtung ändert, und
wobei die Zusatzdaten (50) für jedes der sich nähernden Objekte (36) mindestens einen der folgenden Parameter umfassen:
eine Reihenfolge, in welcher sich die Objekte (36) dem Knotenpunkt (12) nähern;
einen Relativabstand von aufeinanderfolgenden Objekten (36);
einen Zeitpunkt, zu welchen ein jeweiliges Objekt (36) dem Materialfluss (18) hinzugefügt wurde;
einen Aufgabeort, wo das jeweilige Objekt (36) dem Materialfluss (18) hinzugefügt wurde;
einen Weg, den das jeweilige Objekt (36) bisher durch das System (10) zurückgelegt hat; und
eine ortsabhängige Geschwindigkeit, mit der das jeweilige Objekt (36) durch das System (10) bewegt wird.

## Claims

1. A method for controlling a material flow (18) in a storage and picking system (10), which includes a material-flow control (38), at a sensor-controlled node (12) of the material flow (18), where the material flow divides downstream into at least two directions at an outlet side and where a decision on a future direction of material flow is to be taken, wherein the node (12) is implemented by a conveyor system, wherein at least one inlet section (28) of the node (12) is detected by a detection field (26) of one single sensor (22) which is a camera (24), comprising the steps of:
generating (S10), by means of the sensor (22), sensor data (46) representing the material flow (18), which is defined by one or more material-flow objects (36) approaching the node (12) in a downstream direction, in the detection field (26) of the sensor (22);
checking (S16) whether the sensor data (46) includes for each of the approaching objects (36-1, 36-2) at least one associated object feature (40) allowing certain identification of the corresponding object (36); and
if the sensor data (46) includes for each of the objects (36-1, 36-2) the at least one associated feature (40) which allows the certain identification, controlling (S18) the material flow (18) at the node (12) based on the sensor data (46); or
if the sensor data (46) does not include for each of the approaching objects (36-1, 36-2) the at least one associated feature (40) which allows the certain identification (S16), controlling (S26) the material flow (18) at the node (12) at least for such of the objects (36-1, 36-2), the associated feature (40) of which is not included in the sensor data (46), based on an information fusion (S22) of the sensor data (46) with pre-generated additional data (50) originating from at least one information source (52) which differs from the sensor (22) of the node (12) and which is the material-flow control, wherein the additional data (50) includes additional object features (40) which allow, together with the features (40) from the sensor data (46), a sufficiently certain identification (S24),
wherein the controlling the material flow (18) includes a sensor-data synchronized actuating of an actuator, which is provided at the node (12), so that the respective object (36) changes its moving direction,
wherein the additional data (50) for each of the approaching objects (36) includes at least one of the following parameters:
a sequence, in which the objects (36) approach the node (12);
a relative distance of subsequent objects (36); and
a time when a respective object (36) has been added to the material flow (18);
a deposition location where the respective object (36) has been added to the material flow (18);
a path which has been taken by the respective object (36) through the system (10) so far; and
a location-dependent velocity at which the respective object (36) is moved through the system (10).

2. The method of claim 1, wherein the at least one feature (40) is optically recognizable.

3. The method of claim 2, wherein the at least one feature (40) is at least one of a bar code (42), an individualizing color combination, an individualizing manufacturer label (44), an individualizing contour, and an individualizing dimension or size.

4. The method of any of claims 1 to 3, wherein the field of vision (26) of the camera (24) is selected that large that visible bar codes (42) are not resolvable.

5. The method of any of claims 1 to 4, wherein one further additional information source (52) is at least one of a light barrier, a light sensor, a scanner, and a scale.

6. The method of any of claims 1 to 5, wherein the controlling of the material flow (18) includes the sensor-data synchronized actuating of the actuator which is provided at the node (12) so that the respective object (36) changes its moving velocity.

7. The method of any of claims 1 to 5, wherein the checking (S16) includes:
recognizing each of the approaching objects (36) from the sensor data (46);
extracting associated features (40) for each of the recognized objects (36); and
determining, for each of the recognized objects (36), whether the extracted associated features (40) allow the certain identification.

8. The method of any of claims 1 to 7, wherein the information fusion (S22) includes data fusion of the sensor data (46) with the additional data (50) by merging and completing a corresponding incomplete sensor data set, which does not include the associated feature (40) required for the certain identification, with an additional data set, wherein the additional data set includes a variable being present in both the sensor data set and in the additional-data set.

9. The method of claim 8, wherein the additional data set includes one of the features (40) being present in both the sensor data set and in the additional-data set.

10. The method of claim 8 or 9, further comprising the step of:
checking whether the merged and completed sensor data set includes one of the features (40) which includes the sufficiently certain identification.

11. The method of any of claims 1 to 10, wherein the step of the controlling (S18, S26) the material flow (18) at the node (12) includes a synchronized controlling of at least one actuator (34) provided within the region of the node (12).

12. A device for controlling a material flow (18) in a storage and picking system (10), which includes a material-flow control, at a sensor-controlled node (12) of the material flow (18) where the material flow divides downstream into at least two directions at an outlet side and where a decision on the future direction of the material flow of the material flow (18) is to be taken, wherein the node (12) is implemented by a conveyor system, and wherein the device comprises:
one single sensor (22), which is a camera (24) and which comprises a field of vision (26), wherein the sensor (22) is positioned such that the field of vision (26) detects at least an inlet section (28) of the node (12) where one or more material-flow objects (36) simultaneously approach the node (12) in a downstream direction, wherein the sensor (22) generates corresponding sensor data (46);
at least one information source (52) for an information fusion of the sensor data (46) with pre-generated additional data (50) which originates from the at least one information source (52), wherein the at least one information source (52) differs from the sensor (22) at the node (12) and is the material-flow control (38); and
an evaluation device (48) being configured to:
check whether the sensor data (46) for each of the approaching objects (36-1, 36-2) includes at least one associated object feature (40) which allows certain identification of the corresponding object (36); and
if the sensor data (46) for each of the objects (36-1, 36-2) includes the at least one feature (40), outputting a signal for controlling the material flow (18) at the node (12) based on the sensor data (46); or
if the sensor data (46) does not include for each of the approaching objects (36-1, 36-2) the at least one feature (40), outputting a signal for controlling the material flow (18) at the node (12) at least for such of the objects (36-1, 36-2) an associated feature (40) of which is not included in the sensor data (46) based on an information fusion of the sensor data (46) with additional data (50) originating from the at least one information source (52), wherein the additional data (50) includes additional object features (40) which allow, together with the features (40) from the sensor data (46), a sufficiently certain identification; and
conduct the information fusion;
wherein the controlling the material flow (18) includes a sensor-data synchronized actuating of an actuator, which is provided at the node (12), so that the respective object (36) changes its moving direction,
wherein the additional data (50) for each of the approaching objects (36) includes at least one of the following parameters:
a sequence, in which the objects (36) approach the node (12);
a relative distance of subsequent objects (36);
a time when a respective object (36) has been added to the material flow (18);
a deposition location where the respective object (36) has been added to the material flow (18);
a path which has been taken by the respective object (36) through the system (10) so far; and
a location-dependent velocity at which the respective object (36) is moved through the system (10).

## Revendications

1. Procédé permettant de commander un flux de matière (18) dans un système de stockage et de préparation de commande (10) comprenant une commande de flux de matière (38), au niveau d'un noeud de jonction (12) commandé par capteur du flux de matière (18) où le flux de matière se divise en aval en au moins deux directions côté sortie, et où une décision est à prendre concernant une future direction de flux de matière, dans lequel le noeud de jonction est mis en oeuvre par une technique de convoyage, dans lequel au moins une zone d'entrée (28) du noeud de jonction (12) est détectée par un champ de détection (26) d'un seul capteur (22) qui est une caméra (24), comprenant les étapes consistant à :
au moyen du capteur (22), générer (S10) des données de capteur (46) qui représentent dans le champ de détection (26) du capteur (22) le flux de matière (18) qui est défini par un ou plusieurs objets de flux de matière (36) s'approchant du noeud de jonction (12) en aval ;
vérifier (S16) si les données de capteur (46) comprennent pour chacun des objets qui approchent (36-1, 36-2) au moins une particularité d'objet (40) associée qui permet une identification fiable de l'objet (36) en question ; et
si les données de capteur (46) comprennent pour chacun des objets (36-1, 36-2) ladite au moins une particularité (40) associée qui permet l'identification fiable, commander (S18) le flux de matière (18) au noeud de jonction (12) sur la base des données de capteur (46) ; ou
si les données de capteur (46) ne comprennent pas pour chacun des objets qui s'approchent (36-1, 36-2) ladite au moins une particularité (40) associée qui permet l'identification fiable (S16), commander (S26) le flux de matière (18) au noeud de jonction (12) au moins pour ceux des objets (36-1, 36-2) dont la particularité (40) associée n'est pas comprise dans les données de capteur (46) sur la base d'une fusion d'informations (S22) des données de capteur (46) avec des données supplémentaires (50) générées au préalable qui proviennent d'au moins une source d'informations (52) qui se distingue du capteur (22) du noeud de jonction (12) et qui est la commande de flux de matière (38), dans lequel les données supplémentaires (50) comprennent d'autres particularités d'objet (40) qui, en conjonction avec les particularités (40) issues des données de capteur (46), permettent une identification suffisamment fiable (S24),
dans lequel la commande du flux de matière (18) comprend un actionnement, synchronisé par des données de capteur, d'un actionneur qui est prévu au niveau du noeud de jonction (12) de sorte que l'objet (36) respectif change de direction de mouvement,
dans lequel les données supplémentaires (50) comprennent pour chacun des objets (36) qui approchent au moins l'un des paramètres suivants :
un ordre dans lequel les objets (36) s'approchent du noeud de jonction (12) ;
une distance relative d'objets consécutifs (36) ; et
un instant auquel un objet (36) respectif a été ajouté au flux de matière (18) ;
un lieu de chargement où l'objet (36) respectif a été ajouté au flux de matière (18) ;
un chemin que l'objet (36) respectif a parcouru jusqu'à présent à travers le système (10) ; et
une vitesse locale à laquelle l'objet (36) respectif est déplacé à travers le système (10).

2. Procédé selon la revendication 1, dans lequel ladite au moins une particularité (40) peut être reconnue de manière optique.

3. Procédé selon la revendication 2, dans lequel ladite au moins une particularité (40) est un code à barres (42), une combinaison de couleurs distinctive, un marquage d'identification du fabricant distinctif (44), un contour distinctif et/ou une dimension ou taille distinctive.

4. Procédé selon l'une quelconque des revendications 1 à 3, dans lequel le champ de vision (26) de la caméra (24) est choisi avec une dimension telle que des codes à barres visibles (42) ne peuvent pas être résolus.

5. Procédé selon l'une quelconque des revendications 1 à 4, dans lequel une autre des sources d'information (52) est une barrière lumineuse, un détecteur de lumière, un scanner et/ou une balance.

6. Procédé selon l'une quelconque des revendications 1 à 5, dans lequel la commande du flux de matière (18) comprend (12) l'actionnement, synchronisé par des données de capteur, de l'actionneur qui est prévu au noeud de jonction (12), de sorte que l'objet (36) respectif change de vitesse de déplacement.

7. Procédé selon l'une quelconque des revendications 1 à 5, dans lequel la vérification (S16) comprend :
la reconnaissance de chacun des objets (36) qui s'approchent parmi les données de capteur (46) ;
l'extraction de particularités (40) associées pour chacun des objets (36) reconnus ; et
pour chacun des objets (36) reconnus, la détermination si les particularités (40) associées extraites permettent l'identification fiable.

8. Procédé selon l'une quelconque des revendications 1 à 7, dans lequel la fusion d'informations (S22) comprend une fusion de données des données de capteur (46) avec les données supplémentaires (50) en ce qu'un jeu de données de capteur incomplet correspondant qui ne comprend pas la particularité (40) nécessaire à l'identification fiable est regroupé avec et complété par un jeu de données supplémentaires, dans lequel le jeu de données supplémentaires comprend une variable qui existe à la fois dans le jeu de données de capteur et dans le jeu de données supplémentaires.

9. Procédé selon la revendication 8, dans lequel le jeu de données supplémentaires comprend l'une des particularités (40) qui existe à la fois dans le jeu de données de capteur et dans le jeu de données supplémentaires.

10. Procédé selon la revendication 8 ou 9, comprenant en outre l'étape consistant à :
vérifier si le jeu de données de capteur regroupé et complété comprend l'une des particularités (40) qui comprend l'identification suffisamment fiable.

11. Procédé selon l'une quelconque des revendications 1 à 10, dans lequel l'étape de commande (S18, S26) du flux de matière (18) au niveau du noeud de jonction (12) comprend une commande synchronisée d'au moins un actionneur (34) qui est prévu à l'intérieur de la zone du noeud de jonction (12).

12. Dispositif permettant de commander un flux de matière (18) dans un système de stockage et de préparation de commande (10) qui comprend une commande de flux de matière (38), au niveau d'un noeud de jonction (12), commandé par capteur, du flux de matière (18), où le flux de matière se divise en aval en au moins deux directions côté sortie et où une décision est à prendre concernant une future direction de flux de matière, dans lequel le noeud de jonction est mis en oeuvre par une technique de convoyage, et dans lequel le dispositif présente :
un seul capteur (22) au niveau du noeud de jonction, qui est une caméra (24) et qui présente un champ de vision (26), dans lequel le capteur (22) est positionné de sorte que le champ de vision (26) détecte au moins une zone d'entrée (28) du noeud de jonction (12) où un ou plusieurs objets de flux de matière (36) s'approchent en même temps en aval du noeud de jonction (12), dans lequel le capteur (22) génère des données de capteur (46) correspondantes ;
au moins une source d'informations (52) pour une fusion d'informations des données de capteur (46) avec des données supplémentaires (50) générées préalablement qui proviennent de ladite au moins une source d'informations (52), dans lequel ladite au moins une source d'informations (52) est différente du capteur (22) au noeud de jonction (12) et est la commande de flux de matière (38) ; et
un dispositif d'évaluation (48) qui est conçu pour :
vérifier si les données de capteur (46) comprennent pour chacun des objets (36-1, 36-2) qui s'approchent au moins une particularité d'objet (40) associée qui permet une identification fiable de l'objet en question (36) ; et
si les données de capteur (46) pour chacun des objets (36-1, 36-2) comprennent ladite au moins une particularité (40), sortir un signal pour commander le flux de matière (18) au niveau du noeud de jonction (12) sur la base des données de capteur (46) ; ou
si les données de capteur (46) ne comprennent pas pour chacun des objets (36-1, 36-2) qui s'approchent ladite au moins une particularité (40), sortir un signal pour commander le flux de matière (18) au niveau du noeud de jonction (12) au moins pour ceux des objets (36-1, 36-2) dont la particularité (40) associée n'est pas comprise dans les données de capteur (46), sur la base d'une fusion d'informations des données de capteur (46) avec des données supplémentaires (50) qui proviennent de ladite au moins une source d'informations (52), dans lequel les données supplémentaires (50) comprennent d'autres particularités d'objet (40) qui, en conjonction avec les particularités (40) issues des données de capteur (46), permettent une identification suffisamment fiable ; et
effectuer la fusion d'informations ;
dans lequel la commande du flux de matière (18) comprend (12) un actionnement, synchronisé par des données de capteur, d'un actionneur qui est prévu au noeud de jonction (12) de sorte que l'objet (36) respectif change de direction de mouvement, et
dans lequel les données supplémentaires (50) pour chacun des objets (36) qui approchent comprennent au moins l'un des paramètres suivants :
un ordre dans lequel les objets (36) s'approchent du noeud de jonction (12) ;
une distance relative d'objets consécutifs (36) ;
un instant auquel un objet (36) respectif a été ajouté au flux de matière (18) ;
un lieu de chargement où l'objet (36) respectif a été ajouté au flux de matière (18) ;
un chemin que l'objet (36) respectif a parcouru jusqu'à présent à travers le système (10) ; et
une vitesse locale à laquelle l'objet (36) respectif est déplacé à travers le système (10).
